(19) Europäisches Patentamt
European Patent Office
Office européen des brevets

(11) **EP 3 842 667 B1**

(12) **EUROPÄISCHE PATENTSCHRIFT**

(45) Veröffentlichungstag und Bekanntmachung des Hinweises auf die Patenterteilung:
**13.03.2024   Patentblatt 2024/11**

(21) Anmeldenummer: **20216078.4**

(22) Anmeldetag: **21.12.2020**

(51) Internationale Patentklassifikation (IPC):
*F16H 61/47* (2010.01)          *F16H 61/421* (2010.01)
*F16H 61/431* (2010.01)        *F16H 61/456* (2010.01)
*E01C 21/00* (2006.01)          *E01C 23/088* (2006.01)

(52) Gemeinsame Patentklassifikation (CPC):
**F16H 61/47; E01C 21/00; E01C 23/088;**
**F16H 61/421; F16H 61/431; F16H 61/456;**
B60Y 2200/41

(54) **SELBSTFAHRENDE BAUMASCHINE UND VERFAHREN ZUM STEUERN EINER SELBSTFAHRENDEN BAUMASCHINE**

SELF-PROPELLED CONSTRUCTION MACHINE AND METHOD FOR CONTROLLING THE SAME

ENGIN DE CONSTRUCTION AUTONOME ET PROCÉDÉ DE COMMANDE D'UN ENGIN DE CONSTRUCTION AUTONOME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2019   DE 102019135668**

(43) Veröffentlichungstag der Anmeldung:
**30.06.2021   Patentblatt 2021/26**

(73) Patentinhaber: **Wirtgen GmbH**
**53578 Windhagen (DE)**

(72) Erfinder: **Dittmann, Siegbert**
**53560 Vettelschoß (DE)**

(74) Vertreter: **Oppermann, Frank**
**OANDO Oppermann & Oppermann**
**Wilhelminenstrasse 1a**
**65193 Wiesbaden (DE)**

(56) Entgegenhaltungen:
**EP-A1- 1 350 658          DE-A1-102013 106 047**
**DE-B3-102004 040 135   US-A1- 2008 128 189**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine selbstfahrende Baumaschine, insbesondere eine Straßenfräsmaschine, Stabilisierer, Recycler oder Surface-Miner, die einen Maschinenrahmen, der von mindestens drei Laufwerken getragen wird, und eine Antriebseinrichtung zum Antreiben von mindestens zwei Laufwerken aufweist. Darüber hinaus betrifft die Erfindung ein Verfahren zum Steuern einer derartigen Baumaschine.

Straßenfräsmaschinen, Stabilisierer, Recycler oder Surface-Miner verfügen über eine rotierende Arbeitswalze, bei der es sich um eine Fräs- oder Schneidwalze handeln kann. Mit der Arbeitswalze können beispielsweise schadhafte Straßenschichten abgetragen, bestehende Straßenbeläge wiederaufbereitet, das Gelände für den Straßenbau vorbereitet oder Bodenschätze abgebaut werden.

Selbstfahrende Baumaschinen weisen einen Maschinenrahmen auf, der von einem Fahrwerk getragen wird, das mehrere Laufwerke, beispielsweise Kettenlaufwerke oder Räder, umfasst. Es sind Baumaschinen mit in Arbeitsrichtung vorderen, linken und rechten Laufwerken und hinteren, linken und rechten Laufwerken bekannt. Die Baumaschinen können aber auch nur ein vorderes und ein linkes und ein rechtes hinteres Laufwerk oder ein linkes und ein rechtes vorderes und nur ein hinteres Laufwerk aufweisen. Bei den Baumaschinen ist mindestens eines der Laufwerke ein lenkbares Laufwerk. Beispielsweise ist bei einer Kleinfräse, die ein vorderes Laufwerk und zwei hintere Laufwerke aufweist, das vordere Laufwerk ein lenkbares Laufwerk.

Zum Antrieb der Laufwerke verfügen selbstfahrende Baumaschinen im Allgemeinen über eine hydrostatische Antriebseinrichtung, die den antreibbaren Laufwerken zugeordnete Hydraulikmotoren und wenigstens eine von einem Antriebsmotor, insbesondere Verbrennungsmotor, angetriebene Fahrantriebs-Hydraulikpumpe zur Versorgung der Hydraulikmotoren mit einem Volumenstrom von Hydraulikflüssigkeit umfasst.

Die Fahrantriebs-Hydraulikpumpe ist im Allgemeinen eine Verstellpumpe zur Bereitstellung eines Gesamtvolumenstroms von Hydraulikflüssigkeit zur Versorgung der Hydraulikmotoren und die Hydraulikmotoren sind Verstellmotoren. Die Verstellpumpe und die Verstellmotoren weisen jeweils eine Verstelleinrichtung auf, mit der das Schluckvolumen verändert werden kann. Unter Schluckvolumen $V_g$ eines Hydraulikmotors oder einer Hydraulikpumpe wird in diesem Zusammenhang diejenige Menge an Hydraulikflüssigkeit verstanden, die der Hydraulikmotor bzw. die Hydraulikpumpe pro Umdrehung verbraucht. Das Produkt aus Schluckvolumen $V_g$ und Drehzahl $n$ des Hydraulikmotors ergibt den Volumenstrom $Q$, von dem wiederum die Fahrgeschwindigkeit $v$ der selbstfahrenden Baumaschine abhängt.

Die selbstfahrenden Baumaschinen verfügen über eine Steuereinrichtung für die Steuerung der Fahrantriebs-Hydraulikpumpe, um den Hydraulikmotoren der Laufwerke den für die gewünschte Fahrgeschwindigkeit erforderliche Volumenstrom von Hydraulikflüssigkeit bereitzustellen.

Zum Lenken der Laufwerke weisen selbstfahrende Baumaschinen eine Lenkeinrichtung auf, die den lenkbaren Laufwerken zugeordnete Lenkeinrichtungs-Betätigungseinrichtungen, beispielsweise Kolben/Zylinderanordnungen, umfasst, um die Fahrtrichtung der Laufwerke einzustellen.

Das Hydrauliksystem der Baumaschinen weist weiterhin Hydraulikleitungen zum Zuführen bzw. Abführen der Hydraulikflüssigkeit zu den Hydraulikmotoren bzw. von der Fahrantriebs-Hydraulikpumpe auf.

An den Antrieb von selbstfahrenden Baumaschinen werden hohe Anforderungen gestellt. Besonders hohe Anforderungen werden an die Traktion von selbstfahrenden Baumaschinen gestellt, die über Arbeitswalzen verfügen, die einen enormen Widerstand darstellen und deshalb hohe Zugkräfte der Baumaschinen erforderlich machen. Wenn der Vorschub nicht gleichmäßig erfolgt oder die Baumaschine in Kurvenfahrten ruckartige Bewegungen ausführt, verschlechtert sich das Arbeitsergebnis (Fräsbild). Das Problem einer unzureichenden Traktion stellt sich insbesondere bei einem rutschigen Untergrund, wenn die Gefahr besteht, dass ein oder mehrere Laufwerke durchrutschen bzw. durchdrehen.

Zum Stand der Technik gehören selbstfahrende Baumaschinen mit Hydrauliksystemen, die nicht über einen sogenannten hydraulischen Mengenteiler verfügen. Derartige Baumaschinen haben den Nachteil, dass ein Durchrutschen bzw. Durchdrehen eines Laufwerks zu einer signifikanten Erhöhung des Volumenstroms führt, der dem betreffenden Laufwerk zugeführt wird, da sich beim Durchrutschen die Drehzahl des Laufwerks infolge des geringeren Drehmoments stark erhöht. Folglich stehen bei einem für sämtliche Laufwerke vorgegebenen Gesamtvolumenstrom den anderen Laufwerken nur stark verringerte Teilvolumenströme zur Verfügung, wodurch sich die Traktion der Baumaschine insgesamt erheblich verschlechtert. Das kann soweit führen, dass die Maschine am Hang eine Rückwärtsbewegung ausführt. Eine nicht ausreichende Traktion führt zu einer deutlichen Verringerung bzw. Ungleichförmigkeit der Vorschubgeschwindigkeit, womit das Arbeitsergebnis wiederum negativ beeinflusst wird.

Dieses Problem kann mit einem hydraulischen Mengenteiler gelöst werden, der den Gesamtvolumenstrom in Teilvolumenströme aufteilen und sowohl den Volumenstrom als auch die Drehzahl des betreffenden Hydraulikmotors konstant halten kann. Es sind verschiedene Bauarten von Mengenteilern bekannt, zu denen Kolben-Mengenteiler und Zahnrad-Mengenteiler gehören. Nachteilig ist, dass derartige Mengenteiler relativ kostspielige Bauteile sind. Sie müssen hohen Drücken standhalten und präzise arbeiten. Darüber hinaus nehmen sie bei dem begrenzten Platzangebot in einer Baumaschine einen verhältnismäßig großen Bauraum ein.

Einen relativ großen Platzbedarf haben auch die vielen Hydraulikleitungen, die von dem Mengenteiler abgehen bzw. zu dem Mengenteiler führen. In der Praxis hat sich weiterhin gezeigt, dass eine Straßenfräsmaschine mit einer derartigen Steuerung bei einer Kurvenfahrt ruckartige Bewegungen ausführen kann, da mit dem Mengenteiler Drehzahl und Volumenstrom konstant gehalten werden, was wiederum das Fräsbild negativ beeinflusst.

Die US 2008/0128189 A1 beschreibt einen hydrostatischen Fahrzeugantrieb (Heckantrieb) für ein Fahrzeug, welcher über eine in Fahrtrichtung linke bzw. rechte Hydraulikpumpe, die einen linken bzw. rechten Hydraulikmotor antreibt, verfügt, so dass jedem Hydraulikmotor nur eine Hydraulikpumpe zugeordnet ist. Daher kann sich im Fall eines Schlupfes des linken oder rechten Laufwerks der Volumenstrom an Hydraulikflüssigkeit nicht in Teilvolumenströme aufteilen.

Die DE 10 2004 040 135 B3 beschreibt eine Straßenfräsmaschine nach dem Oberbegriff des Patentanspruchs 1, welche in Arbeitsrichtung ein lenkbares, vorderes rechtes und linkes Laufwerk und ein lenkbares, hinteres rechtes und linkes Laufwerk aufweist, wobei ein vorderer rechter bzw. linker Hydraulikmotor dem vorderen rechten bzw. linken Laufwerk und ein hinterer rechter bzw. linker Hydraulikmotor dem hinteren linken Laufwerk zugeordnet sind. Die außermittige Anordnung der Fräswalze am Maschinenrahmen führt beim Vorschub zu einem Drehmoment, das die Fräsmaschine aus der Spur drückt. Die DE 10 2004 040 135 B3 schlägt zur Kompensation dieses Drehmoments vor, die Hydraulikmotoren der Laufwerke derart anzusteuern, dass die Traktion der Laufwerke an der einen Seite des Maschinenrahmens verringert oder an der anderen Seite des Maschinenrahmens vergrößert wird.

Die EP 1 350 658 A1 beschreibt ein Arbeitsfahrzeug mit einem hydraulischen Antriebssystem, bei dem das Schluckvolumen Vg des Hydraulikmotors in Abhängigkeit sowohl von der Drehzahl als auch von dem Druck am Einlass und Auslass des Hydraulikmotors verändert wird. Die Lehre der EP 1 350 658 A1 liegt darin, das Schluckvolumen Vg des Hydraulikmotors des Laufwerks, an dem Schlupf auftritt, zu vergrößern, so dass unter der Voraussetzung eines vorgegebenen Volumenstroms der zugehörigen Hydraulikpumpe die Drehzahl n (Geschwindigkeit) verringert und das Drehmoment M vergrößert wird.

Die DE 10 2013 106 047 A1 beschreibt eine Antischlupfregelung für einen hydrostatischen Fahrantrieb, bei dem sowohl die Verdrängermenge der Pumpe als auch die Verdrängermenge des nicht-schlupfenden Motors um die Überschussmenge des schlupfenden Motors verringert wird, und eine Korrekturverdrängermenge des schlupfenden Motors ermittelt wird, wobei die Verdrängermenge des schlupfenden Motors um die Korrekturverdrängermenge verringert und die Verdrängermenge des nicht-schlupfenden Motors um die Korrekturverdrängermenge erhöht. Dabei wird der zuvor eingestellte Teilvolumenstrom für den jeweiligen Hydraulikmotor nicht konstant gehalten, sondern bei einem schlupfenden Laufwerk letztlich verändert.

Der Erfindung liegt die Aufgabe zugrunde, die Traktion einer selbstfahrenden Baumaschine zu verbessern. Eine weitere Aufgabe der Erfindung ist, die Kurvenfahrt einer selbstfahrenden Baumaschine zu verbessern. Der Erfindung liegt auch die Aufgabe zugrunde, das Arbeitsergebnis der Baumaschine zu verbessern, die Herstellungskosten der Baumaschine zu verringern sowie zusätzlichen Bauraum für andere Aggregate zu schaffen bzw. die Abmessungen der Baumaschine zu verringern.

Die Lösung dieser Aufgaben erfolgt erfindungsgemäß mit den Merkmalen der unabhängigen Patentansprüche. Die abhängigen Ansprüche betreffen bevorzugte Ausführungsformen der Erfindung.

Die erfindungsgemäße selbstfahrende Baumaschine verfügt über einen Maschinenrahmen, der von mindestens drei Laufwerken getragen wird, von denen wenigstens zwei Laufwerke angetrieben sind und eine Antriebseinrichtung zum Antreiben von mindestens zwei Laufwerken. Eine erfindungsgemäße Baumaschine mit vier Laufwerken kann auch zwei unabhängige Fahrantriebs-Stränge umfassen, wobei dann jeder Kreislauf über zwei antreibbare Laufwerke verfügt.

Die erfindungsgemäße Baumaschine sieht in Arbeitsrichtung ein lenkbares vorderes rechtes Laufwerk und ein lenkbares vorderes linkes Laufwerk und ein lenkbares hinteres rechtes Laufwerk und ein lenkbares hinteres linkes Laufwerk vor, wobei ein vorderer rechter Hydraulikmotor dem vorderen rechten Laufwerk und ein vorderer linker Hydraulikmotor dem vorderen linken Laufwerk und ein hinterer rechter Hydraulikmotor dem hinteren rechten Laufwerk und hinterer linker Hydraulikmotor dem hinteren linken Laufwerk zugeordnet sind. Die erfindungsgemäße Steuerung ist vorzugsweise für sämtliche Laufwerke vorgesehen, sie kann aber beispielsweise auch nur für die vorderen oder hinteren Laufwerke vorgesehen sein.

Die Antriebseinrichtung umfasst den antreibbaren Laufwerken zugeordnete verstellbare Hydraulikmotoren mit einem durch eine Verstelleinrichtung veränderbaren Schluckvolumen und mindestens eine von mindestens einem Antriebsmotor angetriebene verstellbare Fahrantriebs-Hydraulikpumpe zur Versorgung der Hydraulikmotoren mit einem veränderbaren Gesamtvolumenstrom von Hydraulikflüssigkeit. Die mindestens eine Fahrantriebs-Hydraulikpumpe kann von mindestens einem Verbrennungsmotor angetrieben werden, der mit einer konstanten Drehzahl laufen kann. Das Schluckvolumen der Fahrantriebs-Hydraulikpumpe kann mit einer Verstelleinrichtung verändert werden.

Darüber hinaus ist eine Steuereinrichtung vorgesehen, die derart konfiguriert ist, dass die mindestens eine verstellbare Fahrantriebs-Hydraulikpumpe derart angesteuert wird, dass ein Gesamtvolumenstrom von Hydraulikflüssigkeit in Abhängigkeit von der gewünschten Fahrgeschwindigkeit bereitgestellt wird.

Die Steuereinrichtung ist ferner derart konfiguriert, dass aus dem von der mindestens einen Fahrantriebs-Hydraulikpumpe bereitgestellten Gesamtvolumenstrom für jeden verstellbaren Hydraulikmotor ein Teilvolumenstrom ermittelt wird, mit dem der jeweilige Hydraulikmotor betrieben werden soll, und bei einer Erhöhung der Drehzahl (n) eines verstellbaren Hydraulikmotors infolge eines Schlupfes des dem verstellbaren Hydraulikmotor zugeordneten Laufwerks die Verstelleinrichtung des verstellbaren Hydraulikmotors derart angesteuert wird, dass für den verstellbaren Hydraulikmotor ein Schluckvolumen eingestellt wird, bei dem der für den verstellbaren Hydraulikmotor ermittelte Teilvolumenstrom eingehalten wird oder sich einstellt bzw. der ermittelte Teilvolumenstrom wiederhergestellt wird.

Die erfindungsgemäße selbstfahrende Baumaschine zeichnet sich dadurch aus, dass ein hydraulischer Mengenteiler nicht erforderlich ist. Wenn die Steuereinrichtung für die Antriebseinrichtung der erfindungsgemäßen Baumaschine Bestandteil der Steuer- und Recheneinheit der Baumaschine ist, sind für die Steuerung des Antriebs zusätzliche Komponenten nicht erforderlich. Die Traktion der Baumaschine kann mit der erfindungsgemäßen Steuerung erheblich verbessert werden. Daraus ergibt sich auch ein verbessertes Arbeitsergebnis. Die erfindungsgemäße Steuerung kann über den gesamten Geschwindigkeitsbereich und Lenkbereich der Baumaschine wirksam sein. Die Steuerung verhindert eine Rückwärtsbewegung am Hang.

Eine bevorzugte Ausführungsform sieht eine Steuerung für die Kurvenfahrt vor, die den Lenkwinkel der Laufwerke berücksichtigt. Bei der Steuerung können neben dem Lenkwinkel aber auch andere Größen und/oder Betriebszustände Berücksichtigung finden. Zur Bestimmung des Lenkwinkels weist das lenkbare Laufwerk einen Lenkwinkel-Sensor auf, der in Abhängigkeit von dem Lenkwinkel ein Lenkwinkel-Signal erzeugt, das die Steuereinrichtung empfängt. Wenn der Lenkwinkel gleich null ist, d. h. bei einer Geradeausfahrt, wird der Gesamtvolumenstrom zu gleichen Teilen in die Teilvolumenströme für die verstellbaren Hydraulikmotoren aufgeteilt. Eine Aufteilung zu gleichen Teilen kann auch bei einem sehr kleinen Lenkwinkel erfolgen. Ist der Lenkwinkel hingegen ungleich null, d. h. bei einer Kurvenfahrt, wird der Gesamtvolumenstrom in die Teilvolumenströme für die verstellbaren Hydraulikmotoren in Abhängigkeit von dem jeweiligen Kurvenradius aufgeteilt, wobei der Kurvenradius auf der Grundlage des Lenkwinkels ermittelt werden kann. Wenn der Volumenstrom der Hydraulikmotoren an den Kurvenradius angepasst wird, kann die Baumaschine in der Kurve gleichmäßig ohne ruckartige Bewegungen fahren. Für die Kurvenfahrt sollten die Lenkwinkel der lenkbaren Laufwerke derart eingestellt sein, dass sich die Verlängerungen von senkrecht auf den lenkbaren Laufwerken stehenden Achsen in einem Punkt, d. h. dem Momentanpol, schneiden (Ackermann Bedingung).

Bei der Aufteilung des Gesamtvolumenstroms in die Teilvolumenströme können die verschiedenen Lenkmodi, beispielsweise eine "Vorderachslenkung", "Hinterachslenkung", "Vorder- und Hinterachslenkung" bzw. "Allradlenkung" (coordinated steering) oder "Hundeganglenkung" (crab steering) Berücksichtigung finden.

Der Gesamtvolumenstrom kann mit einer oder mehreren Fahrantriebs-Hydraulikpumpen bereitgestellt werden. Eine Ausführungsform sieht vor, dass mit einer Fahrantriebs-Hydraulikpumpe Hydraulikflüssigkeit für den vorderen, rechten und linken Hydraulikmotor und den hinteren, rechten und linken Hydraulikmotor bereitstellt wird. Eine andere Ausführungsform sieht eine erste Fahrantriebs-Hydraulikpumpe und eine zweite Fahrantriebs-Hydraulikpumpe vor, wobei der Volumenstrom für den vorderen rechten Hydraulikmotor und den vorderen linken Hydraulikmotor mit der ersten Fahrantriebs-Hydraulikpumpe und der Volumenstrom für den hinteren rechten Hydraulikmotor und den hinteren linken Hydraulikmotor mit der zweiten Fahrantriebs-Hydraulikpumpe bereitstellt wird.

Nachfolgend werden Ausführungsbeispiele der Erfindung unter Bezugnahme auf die Zeichnungen im Einzelnen erläutert.

Es zeigen:

Fig. 1    ein Ausführungsbeispiel einer selbstfahrenden Baumaschine, die über zwei vordere und zwei hintere lenkbare Laufwerke verfügt,

Fig. 2    ein erstes Ausführungsbeispiel der Steuereinrichtung für die verstellbaren Hydraulikmotoren der selbstfahrenden Baumaschine,

Fig. 3    die Stellung der Laufwerke einer Baumaschine mit zwei lenkbaren vorderen Laufwerken während einer Kurvenfahrt in stark vereinfachter schematischer Darstellung,

Fig. 4    die Stellung der hinteren Laufwerke der Baumaschine von Fig. 3 während einer Kurvenfahrt in stark vereinfachter schematischer Darstellung,

Fig. 5A    die Stellung der Laufwerke einer Baumaschine mit lenkbaren vorderen und hinteren Laufwerken während einer Kurvenfahrt in stark vereinfachter schematischer Darstellung,

Fig. 5B    die Stellung der Laufwerke einer Baumaschine im Lenkmodus "Hundeganglenkung" und

Fig. 6    ein zweites Ausführungsbeispiel der Steuereinrichtung für die verstellbaren Hydraulikmotoren der selbstfahrenden Baumaschine.

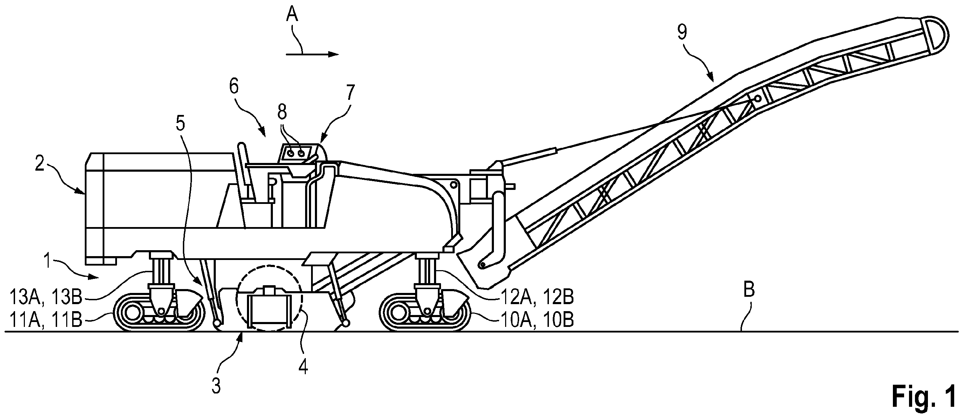

Die Fig. 1 zeigt in der Seitenansicht als Beispiel für eine selbstfahrende Baumaschine eine Straßenfräsmaschine zum Abfräsen von Straßenbelägen, bei der es sich um eine Frontlader-Straßenfräsmaschine handelt. Die Baumaschine verfügt über einen von einem Fahrwerk 1 getragenen Maschinenrahmen 2, an dem eine Arbeitseinrichtung 3 angeordnet ist, mit der die für die Baumaßnahme erforderlichen Arbeiten durchgeführt werden können. Die Arbeitseinrichtung 3 weist eine in Fig. 1 nur andeutungsweise dargestellte Fräswalze 4 auf, die in einem Fräswalzengehäuse 5 angeordnet ist. Oberhalb des Fräswalzengehäuses 5 befindet sich am Maschinenrahmen 2 der Fahrstand 6 mit einem Bedienpult 7 für den Maschinenführer. Das Bedienpult 7 weist mehrere Bedienelemente 8 auf, die der Maschinenführer betätigen kann. Das abgefräste Material wird mit einer Fördereinrichtung 9 abgeführt, die schwenkbar an der Vorderseite des Maschinenrahmens 2 angeordnet ist.

Die Baumaschine weist in Arbeitsrichtung A ein vorderes linkes Laufwerk 10A und ein vorderes rechtes Laufwerk 10B und ein hinteres linkes Laufwerk 11A und ein hinteres rechtes Laufwerk 11B auf. An den Laufwerken sind vordere und hintere Hubeinrichtungen 12A, 12B und 13A, 13B vorgesehen, so dass durch Einfahren bzw. Ausfahren der Hubeinrichtungen Höhe und Neigung des Maschinenrahmens 2 gegenüber der Bodenoberfläche B verändert werden kann.

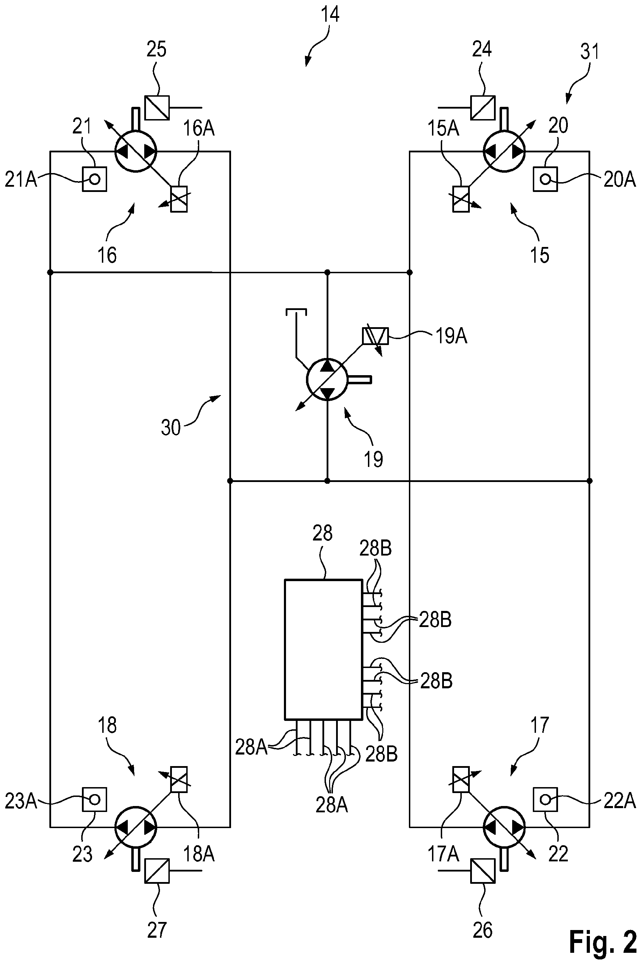

Bei der selbstfahrenden Baumaschine sind sämtliche Laufwerke 10A, 10B und 11A, 11B lenkbare Laufwerke. Für den Antrieb der Laufwerke weist die Baumaschine eine hydrostatische Antriebseinrichtung 14 auf, die nachfolgend unter Bezugnahme auf Fig. 2 im Einzelnen beschrieben wird.

Die hydrostatische Antriebeinrichtung 14 umfasst in Arbeitsrichtung einen dem vorderen rechten Laufwerk 10B zugeordneten vorderen rechten Hydraulikmotor 15, einem dem vorderen linken Laufwerk 10A zugeordneten vorderen linken Hydraulikmotor16, einem dem hinteren rechten Laufwerk 11B zugeordneten hinteren rechten Hydraulikmotor 17 und einem dem hinteren linken Laufwerk 11A zugeordneten hinteren linken Hydraulikmotor 18. Die Hydraulikmotoren sind verstellbare Hydraulikmotoren 15, 16, 17, 18, die eine Verstelleinrichtung 15A, 16A, 17A, 18A zur Einstellung des Schluckvolumens Vg umfassen. Derartige Hydraulikmotoren gehören zum Stand der Technik. Die Hydraulikmotoren können beispielsweise Axialkolbenmotoren sein, die ein zylindrisches Drehteil mit axialen Bohrungen zur Aufnahme von Kolben aufweisen. Die Verstelleinrichtung kann ein elektrisches Stellglied sein, das in Abhängigkeit von einer Steuerspannung oder einem Steuerstrom das Drehteil des Axialkolbenmotors verstellt, so dass sich das Schluckvolumen Vg verändert.

Die verstellbaren Hydraulikmotoren 15, 16, 17, 18 werden von einer Fahrantriebs-Hydraulikpumpe 19 mit Hydraulikflüssigkeit versorgt. Die Fahrantriebs-Hydraulikpumpe 19 wird von einem nicht dargestellten Verbrennungsmotor angetrieben. Bei dem vorliegenden Ausführungsbeispiel ist zur Versorgung der Hydraulikmotoren sämtlicher Laufwerke nur eine Fahrantriebs-Hydraulikpumpe 19 vorgesehen. Die Antriebseinrichtung 14 kann aber beispielsweise auch zwei Fahrantriebs-Hydraulikpumpen umfassen, von denen die eine Hydraulikpumpe beispielsweise Hydraulikflüssigkeit für die vorderen Laufwerke und die andere Pumpe Hydraulikflüssigkeit für die hinteren Laufwerke bereitstellt.

Die Fahrantriebs-Hydraulikpumpe 19 ist eine verstellbare Hydraulikpumpe mit einer Verstelleinrichtung 19A, beispielsweise ein elektrisches Stellglied, so dass der Volumenstrom variabel ist.

Die Baumaschine umfasst weiterhin eine Lenkeinrichtung 31. Den einzelnen Laufwerken 10A, 10B, 11A, 11B sind in Fig. 2 nur andeutungsweise dargestellte Lenkeinrichtungs-Betätigungseinrichtungen 20, 21, 22, 23 (Aktoren) zugeordnet, die an den Laufwerken angreifende Kolben-/Zylinderanordnungen sein können. Die Lenkeinrichtungs-Betätigungseinrichtungen der Lenkeinrichtung 31 weisen Lenkwinkel-Sensoren 20A, 21A, 22A, 23A auf, die in Abhängigkeit von dem Lenkwinkel des jeweiligen Laufwerks ein Lenkwinkel-Signal erzeugen.

Darüber hinaus sind den einzelnen Laufwerken 20, 21, 22, 23 nur andeutungsweise dargestellte Drehzahl-Sensoren 24, 25, 26, 27 zugeordnet, die in Abhängigkeit von der Drehzahl n der Laufwerke bzw. der den Laufwerken zugeordneten Hydraulikmotoren 15, 16, 17, 18 ein Drehzahl-Signal erzeugen.

Zur Ansteuerung der Verstelleinrichtung 19A der Fahrantriebs-Hydraulikpumpe 19 und der Verstelleinrichtungen 15A, 16A, 17A, 18A der Hydraulikmotoren 15, 16, 17, 18 ist eine Steuereinrichtung 28 vorgesehen, die Bestandteil der nicht dargestellten zentralen Steuer- und Recheneinheit der Baumaschine sein kann.

Die Steuereinrichtung 28 ist über Steuerleitungen 28A mit der Verstelleinrichtung 19A der Fahrantriebs-Hydraulikpumpe 19 sowie den Verstelleinrichtungen 15A, 16A, 17A, 18A der Hydraulikmotoren 15, 16, 17, 18 verbunden und empfängt über Signalleitungen 28B die Lenkwinkel-Signale der Lenkwinkel-Sensoren 20A, 21A, 22A, 23A und die DrehzahlSignale der Drehzahl-Sensoren 24, 25, 26, 27.

Die Steuereinrichtung 28 kann analoge oder digitale Schaltkreise umfassen. Sie kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen. Auf den Hardware-Komponenten kann ein Datenverarbeitungsprogramm (Software) laufen, um die einzelnen Komponenten der Baumaschine ansteuern zu können.

Darüber hinaus umfasst das Hydrauliksystem Hydraulikleitungen 30 zum Zuführen und Abführen der Hydraulikflüssigkeit. Der Druckanschluss der Fahrantriebs-Hydraulikpumpe 19 ist mit dem Einlass der beiden vorderen und hinteren Hydraulikmotoren 15, 16, 17, 18 verbunden und der Auslass der vorderen und hinteren Hydraulikmotoren ist mit dem Sauganschluss der Fahrantriebs-Hydraulikpumpe 19 verbunden. Die Fahrantriebs-Hydraulikpumpe 19 stellt einen vorgegebenen Gesamtvolumenstrom von Hydraulikflüssigkeit bereit, der sich auf die einzelnen Hydraulikmotoren verteilt.

Die Steuereinrichtung 28 ist derart konfiguriert, dass die Verstelleinrichtung 19A der Fahrantriebs-Hydraulikpumpe 19 derart angesteuert wird, dass ein bestimmter Gesamtvolumenstrom Q von Hydraulikflüssigkeit bereitgestellt wird. Der Gesamtvolumenstrom Q ist von der gewünschten Fahrgeschwindigkeit v der Baumaschine abhängig, die vom Fahrzeugführer vorgegeben werden kann.

Zunächst sei angenommen, dass sämtliche Laufwerke 10A, 10B und 11A, 11B auf dem Boden B aufstehen und eine ausreichende Haftreibung (Grip) haben, so dass die Laufwerke nicht durchrutschen bzw. durchdrehen. In diesem Fall teilt sich der Gesamtvolumenstrom Q der Fahrantriebs-Hydraulikpumpe 19 idealerweise auf die Hydraulikmotoren 15, 16, 17, 18 zu gleichen Teilen auf. Der Teilvolumenstrom $Q_1$, $Q_2$, $Q_3$, $Q_4$ jedes Hydraulikmotors beträgt 25% des Gesamtvolumenstroms. Folglich steht an jedem Laufwerk 25% der Antriebsleitung zur Verfügung (Antriebsverluste werden vernachlässig).

Wenn hingegen ein Laufwerk 10A, 10B und 11A, 11B durchrutscht, erhöht sich infolge des geringeren Drehmoments, das der dem betreffenden Laufwerk zugeordnete Hydraulikmotor 15A, 16A, 17A, 18A aufbringen muss, die Drehzahl des Laufwerks (Schlupf) bzw. des Hydraulikmotors, was eine Erhöhung des Teilvolumenstroms $Q_1$, $Q_2$, $Q_3$, $Q_4$ des Hydraulikmotors zur Folge hat. Folglich verringern sich die Teilvolumenströme $Q_1$, $Q_2$, $Q_3$, $Q_4$ der anderen Hydraulikmotoren entsprechend. Während das eine Laufwerk durchrutscht, können die anderen Laufwerke die Baumaschine nicht mehr mit ausreichender Leistung antreiben. Dies soll mit der Erfindung verhindert werden, was im Folgenden beschrieben wird.

Die Steuereinrichtung 28 ist derart konfiguriert, dass die nachnachfolgenden Verfahrensschritte durchgeführt werden.

Zunächst wird der Fall einer Geradeausfahrt der Baumaschine beschrieben. In diesem Fall empfängt die Steuereinrichtung 28 ein Lenkwinkel-Signal, das einem Lenkwinkel von null entspricht. Es sei angenommen, dass das vordere rechte Laufwerk 10B durchrutscht, was zu einer Erhöhung dessen Teilvolumenstrom führt. Dies soll verhindert werden.

Die Steuereinrichtung 28 berechnet zunächst aus dem von der mindestens einen Fahrantriebs-Hydraulikpumpe 19 bereitgestellten Gesamtvolumenstrom Q für jeden verstellbaren Hydraulikmotor 15, 16, 17, 18 einen Teilvolumenstrom $Q_1$, $Q_2$, $Q_3$, $Q_4$. Bei einer Geradeausfahrt sollen sämtliche Laufwerke 10A, 10B und 11A, 11B die gleiche Fahrgeschwindigkeit $v_1$, $v_2$, $v_3$, $v_4$ haben bzw. sich die Hydraulikmotoren 15, 16, 17, 18 mit der gleichen Drehzahl $n_1$, $n_2$, $n_3$, $n_4$ drehen. Folglich sollen die einzelnen Hydraulikmotoren jeweils mit 25% des Gesamtvolumenstroms versorgt werden.

Die Steuereinrichtung 28 berechnet somit den Teilvolumenstrom $Q_1$, $Q_2$, $Q_3$, $Q_4$ jedes Hydraulikmotors 15, 16, 17, 18 aus dem Quotienten des Gesamtvolumenstroms Q und der Anzahl A der angetriebenen Laufwerke ($Q_i = Q/A$, $Q_2 = Q/A$, $Q_3 = Q/A$, $Q_4 = Q/A$).

Die Steuereinrichtung 28 steuert die Verstelleinrichtung 15A, 16A, 17A, 18A des Hydraulikmotors 15, 16, 17, 18 derart an, dass für den Hydraulikmotor ein Schluckvolumen Vg eingestellt wird, bei dem sich der für den Hydraulikmotor ermittelte Teilvolumenstrom einstellt.

Der Teilvolumenstrom $Q_1$, $Q_2$, $Q_3$, $Q_4$ berechnet sich aus der Drehzahl n des jeweiligen Hydraulikmotors und dessen Schluckvolumen Vg nach der folgenden Gleichung:

$$Q_{1,2,3,4} = \text{Vg x n}$$

Die Steuereinrichtung 28 kann daher das Schluckvolumen Vg des Hydraulikmotors aus dem vorgegebenen Teilvolumenstrom $Q_1$, $Q_2$, $Q_3$, $Q_4$ und der (bekannten) Drehzahl n des Hydraulikmotors berechnen ($Vg = Q_{1,2,3,4} / n$).

Die Steuereinrichtung 28 ist derart konfiguriert, dass der zuvor für den jeweiligen Hydraulikmotor 15, 16, 17, 18 ermittelte Teilvolumenstrom $Q_1$, $Q_2$, $Q_3$, $Q_4$ konstant gehalten wird ($Q_i = Q_2 = Q_3 = Q_4$ = konstant).

Die Veränderung des Schluckvolumens Vg durch die Steuereinrichtung 28 dient der Konstanthaltung des Teilvolumenstroms. In der Phase, in der der Teilvolumenstrom konstant gehalten wird, kann das verbleibende Drehmoment nicht im Gleichgewicht mit der noch vorhandenen Traktion stehen, d. h. Schlupf kann auftreten. Das betreffende Laufwerk kann wegen der äußeren Einflüsse nach wie vor durchdrehen und nur diese äußeren Einflüsse können wieder dafür sorgen, dass es wieder greift. Während des Schlupfes sorgt die Steuerung aber dafür, dass dem betreffenden Laufwerk nicht beliebig viel von dem Gesamtvolumenstrom zugeführt wird, was dazu führen würde, dass die anderen Laufwerke, die eine ausreichende Traktion haben, nicht oder nur mit einem geringen Volumenstrom versorgt werden. Die erfindungsgemäße Steuerung stellt also sicher, dass die Laufwerke, die nicht durchdrehen, mit einer ausreichenden Menge an Hydraulikflüssigkeit versorgt werden.

Wenn beispielsweise das vordere rechte Laufwerk 10B durchzudrehen beginnt, wodurch sich die Drehzahl n des Hydraulikmotors 15 zu erhöhen beginnt, was eine Erhöhung des Teilvolumenstroms $Q_2$ des vorderen rechten Laufwerks zur Folge hätte, verringert die Steuereinrichtung das Schluckvolumen Vg des Hydraulikmotors. Dadurch nimmt zunächst die Drehzahl n des Hydraulikmotors bzw. des Laufwerks weiter zu. Es stellt sich dann allerdings ein Betriebspunkt ein, bei dem der Teilvolumenstrom $Q_2$ wieder seinen Sollwert einnimmt.

Die Steuereinrichtung 28 stellt also das Schluckvolumen Vg des betreffenden Hydraulikmotors derart ein, dass während des Vorschubs der Baumaschine der für den Hydraulikmotor vorgegebene Teilvolumenstrom $Q_1$, $Q_2$, $Q_3$, $Q_4$ eingehalten bzw. wiederhergestellt wird.

Da die Teilvolumenströme $Q_1$, $Q_2$, $Q_3$, $Q_4$ gleich sind, d. h. das vordere rechte Laufwerk 10B auch bei nicht ausreichender Haftreibung nicht mehr Hydraulikflüssigkeit als die anderen Laufwerke 10A und 11A, 11B erhält, ist die Traktion erheblich verbessert. Im vorliegenden Ausführungsbeispiel bleiben 75% der Zugkraft erhalten.

Bei einer Kurvenfahrt teilt die Steuereinrichtung 28 den Gesamtvolumenstrom Q nicht zu gleichen Teilen, sondern zu ungleichen Teilen in die Teilvolumenströme auf. Die Aufteilung in die Teilvolumenströme $Q_1$, $Q_2$, $Q_3$, $Q_4$ für die verstellbaren Hydraulikmotoren 15, 16, 17, 18 erfolgt in Abhängigkeit von dem Kurvenradius r des jeweiligen Laufwerks.

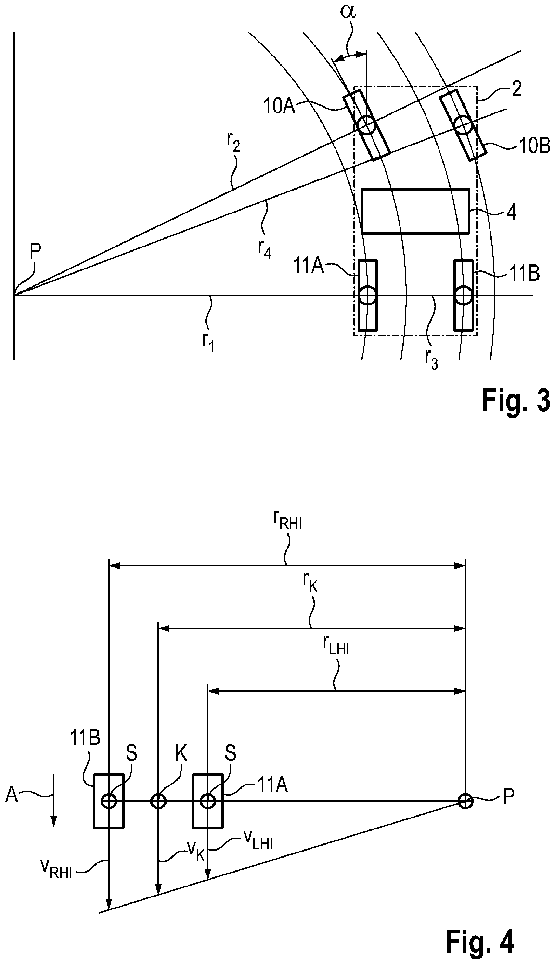

Fig. 3 zeigt den Maschinenrahmen 2 mit den vorderen und hinteren Laufwerken 10A, 10B und 11A, 11B und der Fräzwalze 4 der Baumaschine bei einer Kurvenfahrt. Bei dem vorliegenden Ausführungsbeispiel sind nur die vorderen Laufwerke 10A, 10B lenkbare Laufwerke ("Vorderradlenkung"). Die Lenkwinkel der vorderen Laufwerke 10A werden derart eingestellt, dass sich die Verlängerungen von senkrecht auf den lenkbaren vorderen Laufwerken 10A, 10A stehenden Achsen in dem Momentanpol P schneiden. Die senkrecht auf den nicht lenkbaren hinteren Laufwerken 11A, 11B stehenden Achsen schneiden sich ebenfalls in dem Momentanpol P (Ackermann-Bedingung). Bei einer Kurvenfahrt müssen sich die kurvenäußeren Laufwerke 10B, 11B mit einer höheren Geschwindigkeit v als die kurveninneren Laufwerke 10A, 11A bewegen. Folglich muss die Drehzahl n der Hydraulikmotoren der kurvenäußeren Laufwerke größer als die Drehzahl n der Hydraulikmotoren der kurveninneren Laufwerke sein. Daraus ergeben sich für die Hydraulikmotoren unterschiedliche Teilvolumenströme $Q_1$, $Q_2$, $Q_3$, $Q_4$.

Fig. 4 zeigt die Geschwindigkeitsvektoren $v_{LHI}$ und $v_{RHI}$ der hinteren Laufwerke 11A, 11B für den Fall einer "Vorderradlenkung", wobei die Steuerung der Laufwerke in Bezug auf den Fahrzeug-Referenzpunkt K erfolgt, d. h. die Geschwindigkeit $v_k$ des Fahrzeug-Referenzpunktes K auf der Geradeausfahrt und die Geschwindigkeit $v_k$ des Fahrzeug-Referenzpunktes K auf der Kurvenfahrt gleich sind. Der Abstand eines Referenzpunktes S des in Arbeitsrichtung A rechten hinteren Laufwerks 11B zu dem Momentanpol P ist mit $r_{RHI}$ und der Abstand eines Referenzpunktes S des linken hinteren Laufwerks 11A zu dem Momentanpol P ist mit $r_{LHI}$ bezeichnet (Fig. 3). Mit $r_k$ ist der Abstand des zwischen den beiden Referenzpunkten S liegenden Fahrzeug-Referenzpunktes K zum Momentanpol P bezeichnet. Bei der in Fig. 4 gezeigten Kurvenfahrt wird für das kurvenäußere hintere Laufwerk 11B eine höhere Geschwindigkeit eingestellt als für das kurveninnere hintere Laufwerk 11A.

Die Geschwindigkeiten des kurvenäußeren Laufwerks 11B und des kurveninneren Laufwerk 11A sind von den Radien $r_{RHI}$ und $r_{LHI}$ abhängig. Für die Bestimmung der Geschwindigkeiten für das kurvenäußere und -innere Laufwerk 11B, 11A wird die Fahrzeug-Referenzgeschwindigkeit $v_k$ mit einem Faktor multipliziert, der für das kurvenäußere Laufwerk größer 1 und für das kurveninnere Laufwerk kleiner 1 ist. Dieser Faktor ist vom Radius bzw. Lenkwinkel abhängig, der mit den Lenkwinkel-Sensoren 20, 21, 22, 23 erfasst wird. Da die Geschwindigkeit der Laufwerke 10A, 10B und 11A, 11B proportional zu der Drehzahl der Hydraulikmotoren 15, 16, 17, 18 ist, ergibt sich auch für deren Drehzahlen ein entsprechender Faktor, der von der Steuereinrichtung 28 bei der Berechnung der Teilvolumenströme $Q_1$, $Q_2$, $Q_3$, $Q_4$ zugrunde gelegt wird.

Die erfindungsgemäße Baumaschine sieht verschiedene Lenkmodi vor, zu denen eine "Vorderachslenkung", "Hinterachslenkung", "Vorder- und Hinterachslenkung" bzw. "Allradlenkung" (coordinated steering) oder eine "Hundeganglenkung" (crab steering) zählen können. Bei der "Hundeganglenkung" lenken die vorderen und hinteren Laufwerke in die gleiche Richtung, wobei die Lenkwinkel der Laufwerke gleich sind.

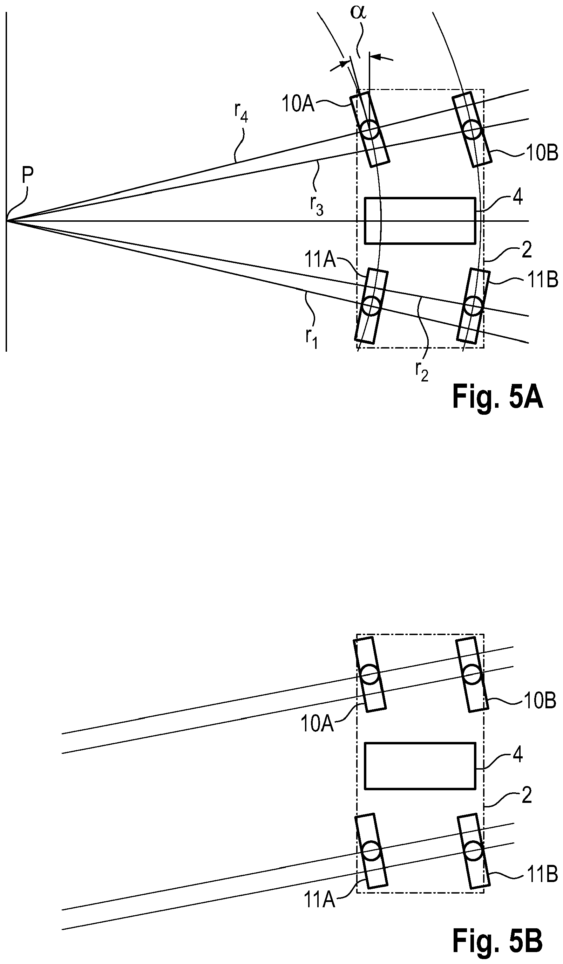

Fig. 5A zeigt eine Ausführungsform einer Baumaschine, die über eine "Allradlenkung" verfügt, wobei die vorderen und hinteren Laufwerke 10A, 10B und 11A, 11B lenkbare Laufwerke sind. Die senkrecht auf den lenkbaren Laufwerken stehenden Achsen schneiden sich in dem Momentanpol P (Ackermann-Bedingung). Die Baumaschine mit den lenkbaren vorderen und hinteren Laufwerken 10A, 10B und 11A, 11B sieht neben dem Lenkmodus "Allradlenkung" (Fig. 5A) auch den Lenkmodus "Hundeganglenkung" vor (Fig. 5B). In diesem Lenkmodus schneiden sich die senkrecht auf den lenkbaren Laufwerken stehenden Achsen im Unendlichen.

Der jeweilige Lenkmodus kann vom Fahrzeugführer am Bedienpult 7 vorgegeben werden. Die Lenkeinrichtung 31 ist derart konfiguriert, dass die Richtung, in die die Laufwerke lenken, und der Lenkwinkel in Abhängigkeit von dem Lenkmodus eingestellt wird.

Die Steuereinrichtung 28 ist derart konfiguriert, dass der Gesamtvolumenstrom Q in die Teilvolumenströme $Q_1$, $Q_2$, $Q_3$, $Q_4$ für die verstellbaren Hydraulikmotoren 15, 16, 17, 18 nicht nur in Abhängigkeit von dem Lenkwinkel, sondern auch in Abhängigkeit von dem vorgegebenen Lenkmodus aufgeteilt wird, d. h. bei der Steuerung der Lenkmodus Berücksichtigung findet.

Wenn als Lenkmodus beispielsweise "Hundeganglenkung" vorgegeben wird, stellen die Lenkeinrichtungs-Betätigungseinrichtungen die vorderen und hinteren rechten und linken Laufwerke 10A, 10B, 11A, 11B der Baumaschine derart ein, dass die Laufwerke in die gleiche Richtung lenken und sämtliche Laufwerke den gleichen Lenkwinkel haben. In diesem Fall sollen sich sämtliche Laufwerke mit der gleichen Vorschubgeschwindigkeit bewegen, obwohl die Laufwerke eingelenkt sind.

Die Steuereinrichtung ist für den Lenkmodus "Hundeganglenkung" derart konfiguriert, dass der Gesamtvolumenstrom Q unabhängig von dem Lenkwinkel zu gleichen Teilen in die Teilvolumenströme ($Q_1$, $Q_2$, $Q_3$, $Q_4$) für die verstellbaren Hydraulikmotoren (15, 16, 17, 18) aufgeteilt wird. Insofern findet bei der Steuerung auch der Lenkmodus Berücksichtigung.

Die Berücksichtigung des Lenkmodus "Hundeganglenkung" ist insbesondere bei Fräsmaschinen mit einer Fräswalze von besonderer Bedeutung, da bei Fräsmaschinen ein derartiger Lenkmodus im Allgemeinen vorgesehen ist.

Für andere Lenkmodi als die "Hundeganglenkung" können sich andere Verteilungen des Volumenstroms ergeben. Bei einer "Allradlenkung" (Fig. 5A) im Vergleich zu einer "Vorderradlenkung" (Fig. 3) beispielsweise ist zu berücksichtigen, dass sich die linken, vorderen und hinteren bzw. rechten, vorderen und hinteren Laufwerke 10A, 11A bzw. 10B, 11B bei einer "Allradlenkung" auf einer gemeinsamen Kreisbahn bewegen, während sich bei einer "Vorderachslenkung" bzw. "Hinterachslenkung" jedes Laufwerk auf seiner eigenen Kreisbahn bewegt. Dabei ist der Lenkwinkel $\alpha$ des vorderen rechten und linken Laufwerks 10A, 10B bei der "Allradlenkung" (Fig. 5A) kleiner als der Lenkwinkel $\alpha$ bei der "Vorderachslenkung" (Fig. 3). Unter Berücksichtigung des vorgegebenen Lenkmodus "Allradlenkung" oder "Vorderachslenkung" bzw. "Hinterachslenkung sieht die Steuerereinrichtung 28 eine Verteilung des Gesamtvolumenstroms in Abhängigkeit von vier unterschiedlichen Radien $r_1$, $r_2$, $r_3$, $r_4$ ("Allradlenkung") oder zwei unterschiedlichen Radien $r_1$, $r_2$ (Vorderachs- bzw. Hinterachslenkung") vor. Folglich stellt die Steuerereinrichtung 28 für die "Vorderachs- bzw. Hinterachslenkung" für jede Hydraulikpumpe 15, 16, 17, 18 einen anderen Teilstrom ein.

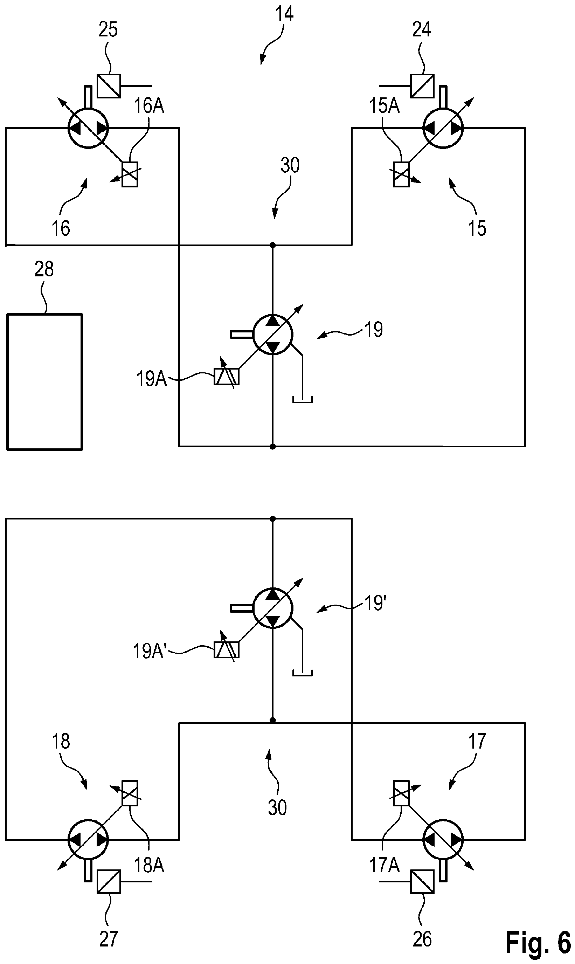

Fig 6. zeigt den Hydraulikschaltplan einer alternativen Ausführungsform einer Antriebseinrichtung 14, die sich von der Antriebseinrichtung von Fig. 2 dadurch unterscheidet, dass anstelle von einer Fahrantriebs-Hydraulikpumpe 19 zwei Fahrantriebs-Hydraulikpumpen 19, 19' vorgesehen sind, wobei die erste Fahrantriebs-Hydraulikpumpe 19 den Volumenstrom für den vorderen rechten Hydraulikmotor 15 und den vorderen linken Hydraulikmotor 16 bereitstellt und die zweite Fahrantriebs-Hydraulikpumpe 19' den Volumenstrom für den hinteren rechten Hydraulikmotor 17 und den hinteren linken Hydraulikmotor 18 bereitstellt. Die einander entsprechenden Teile sind in Fig. 5 mit den gleichen Bezugszeichen wie in Fig. 2 versehen. Bei dieser Ausführungsform wird der Gesamtvolumenstrom Q von beiden Fahrantriebs-Hydraulikpumpen 19. 19' bereitgestellt. Die Steuerung erfolgt analog zu der Ausführungsform von Fig. 2.

**Patentansprüche**

1. Selbstfahrende Baumaschine, insbesondere Straßenfräsmaschine, Stabilisierer, Recycler oder Surface-Miner, die einen von Laufwerken (10A, 10B, 11A, 11B) getragenen Maschinenrahmen (2), eine Antriebseinrichtung (14) zum Antreiben von mindestens zwei Laufwerken und eine am Maschinenrahmen angeordnete Arbeitswalze (4) aufweist, wobei die Antriebseinrichtung (14) den antreibbaren Laufwerken (10A, 10B, 11A, 11B) zugeordnete verstellbare Hydraulikmotoren (15, 16, 17, 18) mit einem durch eine Verstelleinrichtung (15A, 16A, 17A, 18A) veränderbaren Schluckvolumen (Vg) und mindestens eine von mindestens einem Antriebsmotor angetriebene verstellbare Fahrantriebs-Hydraulikpumpe (19) zur Versorgung der Hydraulikmotoren mit einem veränderbaren Gesamtvolumenstrom (Q) von Hydraulikflüssigkeit umfasst, wobei eine Steuereinrichtung (28) vorgesehen ist, die derart konfiguriert ist, dass die mindestens eine verstellbare Fahrantriebs-Hydraulikpumpe (19) derart angesteuert wird, dass ein Gesamtvolumenstrom (Q) von Hydraulikflüssigkeit in Abhängigkeit von der gewünschten Fahrgeschwindigkeit (v) bereitgestellt wird, wobei

 die Baumaschine in Arbeitsrichtung ein lenkbares vorderes rechtes Laufwerk (10B) und ein lenkbares vorderes linkes Laufwerk (10A) und ein lenkbares hinteres rechtes Laufwerk (11B) und ein lenkbares hinteres linkes Laufwerk (11A) aufweist, wobei ein vorderer rechter Hydraulikmotor (15) dem vorderen rechten Laufwerk und ein vorderer linker Hydraulikmotor (16) dem vorderen linken Laufwerk und ein hinterer rechter Hydraulikmotor (17) dem hinteren rechten Laufwerk und ein hinterer linker Hydraulikmotor (18) dem hinteren linken Laufwerk zugeordnet sind,

 **dadurch gekennzeichnet, dass**
 die Steuereinrichtung (28) ferner derart konfiguriert ist, dass aus dem von der mindestens einen Fahrantriebs-Hydraulikpumpe (19) bereitgestellten Gesamtvolumenstrom (Q) für jeden verstellbaren Hydraulikmotor (15, 16, 17, 18) ein Teilvolumenstrom ($Q_1$, $Q_2$, $Q_3$, $Q_4$) ermittelt wird, mit dem der jeweilige Hydraulikmotor betrieben werden soll, und bei einer Erhöhung der Drehzahl (n) eines verstellbaren Hydraulikmotors infolge eines Schlupfes des dem verstellbaren Hydraulikmotor zugeordneten Laufwerks (10A, 10B, 11A, 11B) die Verstelleinrichtung (15A, 16A, 17A, 18A) des verstellbaren Hydraulikmotors (15, 16, 17, 18) derart angesteuert wird, dass für den verstellbaren Hydraulikmotor ein Schluckvolumen (Vg) eingestellt wird, bei dem der für den verstellbaren Hydraulikmotor

ermittelte Teilvolumenstrom ($Q_1$, $Q_2$, $Q_3$, $Q_4$) eingehalten wird oder sich einstellt bzw. der ermittelte Teilvolumenstrom wiederhergestellt wird.

2. Selbstfahrende Baumaschine nach Anspruch 1, **dadurch gekennzeichnet, dass** mindestens ein Laufwerk ein lenkbares Laufwerk (10A, 10B, 11A, 11B) ist, dessen Lenkwinkel einstellbar ist, wobei das Laufwerk einen Lenkwinkel-Sensor (20A, 21A, 22A, 23A) aufweist, der in Abhängigkeit von dem Lenkwinkel ein Lenkwinkel-Signal erzeugt, und die Steuereinrichtung (28) derart konfiguriert ist, dass aus dem Gesamtvolumenstrom (Q) für jeden verstellbaren Hydraulikmotor (15, 16, 17, 18) ein Teilvolumenstrom ($Q_1$, $Q_2$, $Q_3$, $Q_4$) in Abhängigkeit von dem Lenkwinkel-Signal des mindestens einen lenkbaren Laufwerks ermittelt wird.

3. Selbstfahrende Baumaschine nach Anspruch 2, **dadurch gekennzeichnet, dass** die Steuereinrichtung (28) derart konfiguriert ist, dass bei einer Geradeausfahrt, bei der der Lenkwinkel des mindestens einen lenkbaren Laufwerks (10A, 10B, 11A, 11B) im Wesentlichen null ist, der Gesamtvolumenstrom (Q) zu gleichen Teilen in die Teilvolumenströme ($Q_1$, $Q_2$, $Q_3$, $Q_4$) für die verstellbaren Hydraulikmotoren (15, 16, 17, 18) aufgeteilt wird.

4. Selbstfahrende Baumaschine nach Anspruch 2, **dadurch gekennzeichnet, dass** die Steuereinrichtung (28) derart konfiguriert ist, dass bei einer Kurvenfahrt, bei der der Lenkwinkel des mindestens einen lenkbaren Laufwerks (10A, 10B, 11A, 11B) nicht null ist, der Gesamtvolumenstrom (Q) in die Teilvolumenströme ($Q_1$, $Q_2$, $Q_3$, $Q_4$) für die verstellbaren Hydraulikmotoren (15, 16, 17, 18) in Abhängigkeit von dem Kurvenradius des jeweiligen Laufwerks aufgeteilt wird.

5. Selbstfahrende Baumaschine nach Anspruch 2, **dadurch gekennzeichnet, dass** die Baumaschine mehrere Lenkmodi vorsieht, wobei die Steuereinrichtung (28) derart konfiguriert ist, dass aus dem Gesamtvolumenstrom (Q) für jeden verstellbaren Hydraulikmotor (15, 16, 17, 18) ein Teilvolumenstrom (Q1, Q2, Q3, Q4) in Abhängigkeit von dem vorgegebenen Lenkmodus ermittelt wird.

6. Selbstfahrende Baumaschine nach einem der Ansprüche 1 bis 5, **dadurch gekennzeichnet, dass** die Lenkwinkel der lenkbaren Laufwerke (10A, 10B, 11A, 11B) derart eingestellt sind, dass sich die Verlängerungen von senkrecht auf den lenkbaren Laufwerken stehenden Achsen in einem Momentanpol (P) schneiden.

7. Selbstfahrende Baumaschine nach Anspruch 6, **da-**

**durch gekennzeichnet, dass** nur eine Fahrantriebs-Hydraulikpumpe (19) vorgesehen ist, die den Gesamtvolumenstrom (Q) für den vorderen, rechten und linken Hydraulikmotor (15, 16) und den hinteren, rechten und linken Hydraulikmotor (17, 18) bereitstellt, oder

eine erste Fahrantriebs-Hydraulikpumpe (19) und eine zweite Fahrantriebs-Hydraulikpumpe (19') vorgesehen sind, wobei die erste Fahrantriebs-Hydraulikpumpe (19) den Volumenstrom für den vorderen rechten Hydraulikmotor (15) und den vorderen linken Hydraulikmotor (16) bereitstellt und die zweite Fahrantriebs-Hydraulikpumpe (19) den Volumenstrom für den hinteren rechten Hydraulikmotor (17) und den hinteren linken Hydraulikmotor (18) bereitstellt.

8. Verfahren zum Steuern einer selbstfahrenden Baumaschine, die einen von Laufwerken (10A, 10B, 11A, 11B) getragenen Maschinenrahmen (2), eine am Maschinenrahmen angeordnete Arbeitswalze (4) und eine Antriebseinrichtung (14) zum Antreiben von mindestens zwei Laufwerken aufweist, welche den antreibbaren Laufwerken zugeordnete verstellbare Hydraulikmotoren (15, 16, 17, 18) mit einem veränderbaren Schluckvolumen (Vg) und mindestens eine verstellbare Fahrantriebs-Hydraulikpumpe (19) zur Versorgung der Hydraulikmotoren mit einem veränderbaren Gesamtvolumenstrom (Q) von Hydraulikflüssigkeit umfasst, wobei die mindestens eine verstellbare Fahrantriebs-Hydraulikpumpe (19) derart angesteuert wird, dass ein Gesamtvolumenstrom (Q) von Hydraulikflüssigkeit in Abhängigkeit von der gewünschten Fahrgeschwindigkeit (v) bereitgestellt wird, wobei

die Baumaschine in Arbeitsrichtung ein lenkbares vorderes rechtes Laufwerk (10B) und ein lenkbares vorderes linkes Laufwerk (10A) und ein lenkbares hinteres rechtes Laufwerk (11B) und ein lenkbares hinteres linkes Laufwerk (11A) aufweist, wobei ein vorderer rechter Hydraulikmotor (15) dem vorderen rechten Laufwerk und ein vorderer linker Hydraulikmotor (16) dem vorderen linken Laufwerk und ein hinterer rechter Hydraulikmotor (17) dem hinteren rechten Laufwerk und ein hinterer linker Hydraulikmotor (18) dem hinteren linken Laufwerk zugeordnet sind,
**dadurch gekennzeichnet, dass**
aus dem von der mindestens einen Fahrantriebs-Hydraulikpumpe (19) bereitgestellten Gesamtvolumenstrom (Q) für jeden verstellbaren Hydraulikmotor (15, 16, 17, 18) ein Teilvolumenstrom ($Q_1$, $Q_2$, $Q_3$, $Q_4$) ermittelt wird, mit dem der jeweilige Hydraulikmotor betrieben werden soll, und bei einer Erhöhung der Drehzahl (n) eines verstellbaren Hydraulikmotors (15, 16, 17, 18) infolge eines Schlupfes des dem verstellbaren Hydraulikmotor zugeordneten Laufwerks (10A, 10B, 11A, 11B) der verstellbare Hydraulikmotor derart angesteuert wird, dass für den verstellbaren Hydraulikmotor ein Schluckvolumen $(V_g)$ eingestellt wird, bei dem der für den verstellbaren Hydraulikmotor ermittelte Teilvolumenstrom $(Q_1, Q_2, Q_3, Q_4)$ eingehalten wird oder sich einstellt bzw. der ermittelte Teilvolumenstrom wiederhergestellt wird.

9. Verfahren nach Anspruch 8, **dadurch gekennzeichnet, dass** aus dem Gesamtvolumenstrom (Q) für jeden verstellbaren Hydraulikmotor (15, 16, 17, 18) ein Teilvolumenstrom $(Q_1, Q_2, Q_3, Q_4)$ in Abhängigkeit von dem Lenkwinkel des mindestens einen lenkbaren Laufwerks (10A, 10B, 11A, 11B) ermittelt wird.

10. Verfahren nach Anspruch 9, **dadurch gekennzeichnet, dass** bei einer Geradeausfahrt, bei der der Lenkwinkel des mindestens einen lenkbaren Laufwerks (10A, 10B, 11A, 11B) im Wesentlichen null ist, der Gesamtvolumenstrom (Q) zu gleichen Teilen in die Teilvolumenströme $(Q_1, Q_2, Q_3, Q_4)$ für die verstellbaren Hydraulikmotoren (15, 16, 17, 18) aufgeteilt wird.

11. Verfahren nach Anspruch 9, **dadurch gekennzeichnet, dass** bei einer Kurvenfahrt, bei der der Lenkwinkel des mindestens einen lenkbaren Laufwerks (10A, 10B, 11A, 11B) nicht null ist, der Gesamtvolumenstrom (Q) in die Teilvolumenströme $(Q_1, Q_2, Q_3, Q_4)$ für die verstellbaren Hydraulikmotoren (15, 16, 17, 18) in Abhängigkeit von dem Kurvenradius (r) des jeweiligen Laufwerks (10A, 10B, 11A, 11B) aufgeteilt wird.

12. Verfahren nach Anspruch 8, **dadurch gekennzeichnet, dass** die Baumaschine mehrere Lenkmodi vorsieht, wobei die Steuereinrichtung (28) derart konfiguriert ist, dass aus dem Gesamtvolumenstrom (Q) für jeden verstellbaren Hydraulikmotor (15, 16, 17, 18) ein Teilvolumenstrom (Q1, Q2, Q3, Q4) in Abhängigkeit von dem Lenkmodus ermittelt wird.

13. Verfahren nach einem der Ansprüche 8 bis 12, **dadurch gekennzeichnet, dass** die Lenkwinkel der lenkbaren Laufwerke (10A, 10B, 11A, 11B) derart eingestellt werden, dass sich die Verlängerungen von senkrecht auf den lenkbaren Laufwerken stehenden Achsen in einem Momentanpol (P) schneiden.

14. Verfahren nach einem der Ansprüche 8 bis 13, **dadurch gekennzeichnet, dass** der Gesamtvolumenstrom (Q) von Hydraulikflüssigkeit für den vorderen, rechten und linken Hydraulikmotor (15, 16) und den hinteren, rechten und linken Hydraulikmotor (17, 18) nur mit einer Fahrantriebs-Hydraulikpumpe (19) bereitstellt wird, oder der Gesamtvolumenstrom für den vorderen rechten Hydraulikmotor (15) und den vorderen linken Hydraulikmotor (16) mit einer ersten Fahrantriebs-Hydraulikpumpe (19) und der Volumenstrom für den hinteren rechten Hydraulikmotor (17) und den hinteren linken Hydraulikmotor (18) mit einer zweiten Fahrantriebs-Hydraulikpumpe (19') bereitstellt wird.

**Claims**

1. Self-propelled construction machine, in particular road milling machine, stabiliser, recycler or surface miner, which has a machine frame (2) supported by running gears (10A, 10B, 11A, 11B), a drive device (14) for driving at least two running gears, and a work roller (4) arranged on the machine frame, the drive device (14) comprising adjustable hydraulic motors (15, 16, 17, 18) associated with the drivable running gears (10A, 10B, 11A, 11B), which hydraulic motors have a displacement volume $(V_g)$ that can be varied by an adjusting device (15A, 16A, 17A, 18A), and comprising at least one adjustable travel drive-hydraulic pump (19) that is driven by at least one drive motor to supply the hydraulic motors with a variable total volume flow (Q) of hydraulic fluid, a control device (28) being provided which is configured in such a way that the at least one adjustable travel drive-hydraulic pump (19) is controlled in such a way that a total volume flow (Q) of hydraulic fluid is provided depending on the desired travel speed (v),

the construction machine comprising, relative to the working direction, a steerable front right running gear (10B) and a steerable front left running gear (10A) and a steerable rear right running gear (11B) and a steerable rear left running gear (11A), a front right hydraulic motor (15) being associated with the front right running gear and a front left hydraulic motor (16) being associated with the front left running gear and a rear right hydraulic motor (17) being associated with the rear right running gear and a rear left hydraulic motor (18) being associated with the rear left running gear,
**characterised in that**
the control device (28) is also configured in such a way that a partial volume flow $(Q_1, Q_2, Q_3, Q_4)$ is determined for each adjustable hydraulic motor (15, 16, 17, 18) from the total volume flow (Q) provided by the at least one travel drive-hydraulic pump (19), by means of which partial volume flow the particular hydraulic motor is to be operated, and when the speed (n) of an adjustable hydraulic motor increases as a result of slippage of the running gear (10A, 10B, 11A, 11B) associated with the adjustable hydraulic motor, the adjusting device (15A, 16A, 17A, 18A) of the adjustable hydraulic motor (15, 16, 17, 18) is controlled in such a way that a displacement volume ($V_g$) is set for the adjustable hydraulic motor, at which displacement volume the partial volume flow ($Q_1$, $Q_2$, $Q_3$, $Q_4$) determined for the adjustable hydraulic motor is maintained or is set or the determined partial volume flow is restored.

2. Self-propelled construction machine according to claim 1, **characterised in that** at least one running gear is a steerable running gear (10A, 10B, 11A, 11B), the steering angle of which is adjustable, the running gear having a steering angle sensor (20A, 21A, 22A, 23A) which generates a steering angle signal depending on the steering angle, and the control device (28) is configured in such a way that a partial volume flow ($Q_1$, $Q_2$, $Q_3$, $Q_4$) is determined for each adjustable hydraulic motor (15, 16, 17, 18) from the total volume flow ($Q$) depending on the steering angle signal from the at least one steerable running gear.

3. Self-propelled construction machine according to claim 2, **characterised in that** the control device (28) is configured in such a way that, when travelling straight ahead, during which the steering angle of the at least one steerable running gear (10A, 10B, 11A, 11B) is substantially zero, the total volume flow ($Q$) is divided equally into the partial volume flows ($Q_1$, $Q_2$, $Q_3$, $Q_4$) for the adjustable hydraulic motors (15, 16, 17, 18).

4. Self-propelled construction machine according to claim 2, **characterised in that** the control device (28) is configured in such a way that, when cornering, during which the steering angle of the at least one steerable running gear (10A, 10B, 11A, 11B) is not zero, the total volume flow ($Q$) is divided into the partial volume flows ($Q_1$, $Q_2$, $Q_3$, $Q_4$) for the adjustable hydraulic motors (15, 16, 17, 18) depending on the curve radius of the particular running gear.

5. Self-propelled construction machine according to claim 2, **characterised in that** the construction machine provides a plurality of steering modes, the control device (28) being configured in such a way that a partial volume flow (Q1, Q2, Q3, Q4) is determined for each adjustable hydraulic motor (15, 16, 17, 18) from the total volume flow ($Q$) depending on the specified steering mode.

6. Self-propelled construction machine according to any of claims 1 to 5, **characterised in that** the steering angles of the steerable running gears (10A, 10B, 11A, 11B) are set in such a way that the extensions of axes that are perpendicular to the steerable running gears intersect at an instantaneous centre of rotation (P).

7. Self-propelled construction machine according to claim 6, **characterised in that** only one travel drive-hydraulic pump (19) is provided, which provides the total volume flow ($Q$) for the front right and left hydraulic motors (15, 16) and the rear right and left hydraulic motors (17, 18), or a first travel drive-hydraulic pump (19) and a second travel drive-hydraulic pump (19') are provided, the first travel drive-hydraulic pump (19) providing the volume flow for the front right hydraulic motor (15) and the front left hydraulic motor (16) and the second travel drive-hydraulic pump (19) providing the volume flow for the rear right hydraulic motor (17) and the rear left hydraulic motor (18).

8. Method for controlling a self-propelled construction machine which has a machine frame (2) supported by running gears (10A, 10B, 11A, 11B), a work roller (4) arranged on the machine frame, and a drive device (14) for driving at least two running gears, which drive device comprises adjustable hydraulic motors (15, 16, 17, 18) associated with the drivable running gears, which hydraulic motors have a variable displacement volume ($V_g$), and comprises at least one adjustable travel drive-hydraulic pump (19) for supplying the hydraulic motors with a variable total volume flow ($Q$) of hydraulic fluid, the at least one adjustable travel drive-hydraulic pump (19) being controlled in such a way that a total volume flow ($Q$) of hydraulic fluid is provided depending on the desired travel speed ($v$),

  the construction machine comprising, relative to the working direction, a steerable front right running gear (10B) and a steerable front left running gear (10A) and a steerable rear right running gear (11B) and a steerable rear left running gear (11A), a front right hydraulic motor (15) being associated with the front right running gear and a front left hydraulic motor (16) being associated with the front left running gear and a rear right hydraulic motor (17) being associated with the rear right running gear and a rear left hydraulic motor (18) being associated with the rear left running gear,
  **characterised in that**
  a partial volume flow ($Q_1$, $Q_2$, $Q_3$, $Q_4$) is determined for each adjustable hydraulic motor (15, 16, 17, 18) from the total volume flow ($Q$) provided by the at least one travel drive-hydraulic pump (19), by means of which partial volume flow the particular hydraulic motor is to be operated, and when the speed ($n$) of an adjustable hydraulic motor (15, 16, 17, 18) increases as a result of slippage of the running gear (10A, 10B, 11A, 11B) associated with the adjustable hydraulic motor, the adjustable hydraulic motor is controlled in such a way that a displacement volume (Vg) is set for the adjustable hydraulic motor, at which displacement volume the partial volume flow ($Q_1$, $Q_2$, $Q_3$, $Q_4$) determined for the adjustable hydraulic motor is maintained or is set or the determined partial volume flow is restored.

9. Method according to claim 8, **characterised in that** a partial volume flow ($Q_1$, $Q_2$, $Q_3$, $Q_4$) is determined for each adjustable hydraulic motor (15, 16, 17, 18) from the total volume flow (Q) depending on the steering angle of the at least one steerable running gear (10A, 10B, 11A, 11B).

10. Method according to claim 9, **characterised in that**, when travelling straight ahead, during which the steering angle of the at least one steerable running gear (10A, 10B, 11A, 11B) is substantially zero, the total volume flow (Q) is divided equally into the partial volume flows ($Q_1$, $Q_2$, $Q_3$, $Q_4$) for the adjustable hydraulic motors (15, 16, 17, 18).

11. Method according to claim 9, **characterised in that**, when cornering, during which the steering angle of the at least one steerable running gear (10A, 10B, 11A, 11B) is not zero, the total volume flow (Q) is divided into the partial volume flows ($Q_1$, $Q_2$, $Q_3$, $Q_4$) for the adjustable hydraulic motors (15, 16, 17, 18) depending on the curve radius (r) of the particular running gear (10A, 10B, 11A, 11B).

12. Method according to claim 8, **characterised in that** the construction machine provides a plurality of steering modes, the control device (28) being configured in such a way that a partial volume flow (Q1, Q2, Q3, Q4) is determined for each adjustable hydraulic motor (15, 16, 17, 18) from the total volume flow (Q) depending on the steering mode.

13. Method according to any of claims 8 to 12, **characterised in that** the steering angles of the steerable running gears (10A, 10B, 11A, 11B) are set in such a way that the extensions of axes that are perpendicular to the steerable running gears intersect at an instantaneous centre of rotation (P).

14. Method according to any of claims 8 to 13, **characterised in that** the total volume flow (Q) of hydraulic fluid for the front right and left hydraulic motors (15, 16) and the rear right and left hydraulic motors (17, 18) is provided by means of only one travel drive-hydraulic pump (19), or the total volume flow for the front right hydraulic motor (15) and the front left hydraulic motor (16) is provided by means of a first travel drive-hydraulic pump (19) and the volume flow for the rear right hydraulic motor (17) and the rear left hydraulic motor (18) is provided by means of a second travel drive-hydraulic pump (19').

**Revendications**

1. Engin de chantier automoteur, en particulier fraiseuse routière, stabilisateur, recycleur ou engin d'exploitation à ciel ouvert, dit "Surface-Miner", comprenant un châssis d'engin (2) porté des mécanismes de roulement (10A, 10B, 11A, 11B), un dispositif d'entraînement (14) pour entraîner au moins deux mécanismes de roulement, et un cylindre de travail (4) disposé sur le châssis de l'engin,
dans lequel

le dispositif d'entraînement (14) comprend des moteurs hydrauliques réglables (15, 16, 17, 18), associés aux mécanismes de roulement (10A, 10B, 11A, 11B) à entraîner et ayant un volume d'absorption (Vg) variable par un dispositif de réglage (15A, 16A, 17A, 18A), et au moins une pompe hydraulique réglable (19) d'entraînement de déplacement, entraînée par au moins un moteur d'entraînement et destinée à alimenter les moteurs hydrauliques en un débit volumique total variable (Q) de liquide hydraulique, il est prévu un dispositif de commande (28) configuré de telle sorte que ladite au moins une pompe hydraulique réglable (19) d'entraînement de déplacement est commandée de telle sorte qu'un débit volumique total (Q) de liquide hydraulique est fourni en fonction de la vitesse de déplacement souhaitée (v),
l'engin de chantier comprend, dans le sens de travail, un mécanisme de roulement orientable avant droit (10B) et un mécanisme de roulement orientable avant gauche (10A) et un mécanisme de roulement orientable arrière droit (11B) et un mécanisme de roulement orientable arrière gauche (11A),
un moteur hydraulique avant droit (15) est associé au mécanisme de roulement avant droit, et un moteur hydraulique avant gauche (16) est associé au mécanisme de roulement avant gauche, et un moteur hydraulique arrière droit (17) est associé au mécanisme de roulement arrière droit, et un moteur hydraulique arrière gauche (18) est associé au mécanisme de roulement arrière gauche,
**caractérisé en ce que**
le dispositif de commande (28) est en outre configuré de telle sorte que, pour chaque moteur hydraulique réglable (15, 16, 17, 18), un débit volumique partiel ($Q_1$, $Q_2$, $Q_3$, $Q_4$) avec lequel

le moteur hydraulique respectif doit être actionné est déterminé à partir du débit volumique total (Q) fourni par ladite au moins une pompe hydraulique (19) d'entraînement de déplacement, et, lors d'une augmentation de la vitesse de rotation (n) d'un moteur hydraulique réglable suite à un glissement du mécanisme de roulement (10A, 10B, 11A, 11B) associé au moteur hydraulique réglable, le dispositif de réglage (15A, 16A, 17A, 18A) du moteur hydraulique réglable (15, 16, 17, 18) est commandé de telle sorte qu'un volume d'absorption (Vg) est réglé pour le moteur hydraulique réglable, au niveau duquel le débit volumique partiel ($Q_1$, $Q_2$, $Q_3$, $Q_4$) déterminé pour le moteur hydraulique réglable est respecté ou s'établit, ou le débit volumique partiel déterminé est rétabli.

2. Engin de chantier automoteur selon la revendication 1,
**caractérisé en ce qu'**au moins un mécanisme de roulement est un mécanisme de roulement orientable (10A, 10B, 11A, 11B) dont l'angle de braquage est réglable, le mécanisme de roulement présentant un capteur d'angle de braquage (20A, 21A, 22A, 23A) qui génère un signal d'angle de braquage en fonction de l'angle de braquage, et le dispositif de commande (28) est configuré de telle sorte que pour chaque moteur hydraulique réglable (15, 16, 17, 18), à partir du débit volumique total (Q), un débit volumique partiel ($Q_1$, $Q_2$, $Q_3$, $Q_4$) est déterminé en fonction du signal d'angle de braquage dudit au moins un mécanisme de roulement orientable.

3. Engin de chantier automoteur selon la revendication 2,
**caractérisé en ce que** le dispositif de commande (28) est configuré de telle sorte que, lors d'un déplacement en ligne droite où l'angle de braquage dudit au moins un mécanisme de roulement orientable (10A, 10B, 11A, 11B) est essentiellement nul, le débit volumique total (Q) est divisé en parts égales en les débits volumiques partiels ($Q_1$, $Q_2$, $Q_3$, $Q_4$) pour les moteurs hydrauliques réglables (15, 16, 17, 18).

4. Engin de chantier automoteur selon la revendication 2,
**caractérisé en ce que** le dispositif de commande (28) est configuré de telle sorte que, lors d'un déplacement en virage où l'angle de braquage dudit au moins un mécanisme de roulement orientable (10A, 10B, 11A, 11B) n'est pas nul, le débit volumique total (Q) est divisé en les débits volumiques partiels ($Q_1$, $Q_2$, $Q_3$, $Q_4$) pour les moteurs hydrauliques réglables (15, 16, 17, 18) en fonction du rayon de virage du mécanisme de roulement concerné.

5. Engin de chantier automoteur selon la revendication 2,
**caractérisé en ce que** l'engin de chantier prévoit plusieurs modes de direction, le dispositif de commande (28) étant configuré de telle sorte qu'à partir du débit volumique total (Q), pour chaque moteur hydraulique réglable (15, 16, 17, 18), un débit volumique partiel ($Q_1$, $Q_2$, $Q_3$, $Q_4$) est déterminé en fonction du mode de direction donné.

6. Engin de chantier automoteur selon l'une des revendications 1 à 5,
**caractérisé en ce que** les angles de braquage des mécanismes de roulement orientables (10A, 10B, 11A, 11B) sont réglés de telle sorte que les prolongements d'axes perpendiculaires aux mécanismes de roulement orientables se coupent en un centre instantané de rotation (P).

7. Engin de chantier automoteur selon la revendication 6,
**caractérisé en ce qu'**il est prévu une seule pompe hydraulique (19) d'entraînement de déplacement, qui fournit le débit volumique total (Q) pour les moteurs hydrauliques avant droit et gauche (15, 16) et pour les moteurs hydrauliques arrière droit et gauche (17, 18), ou
il est prévu une première pompe hydraulique (19) d'entraînement de déplacement et une deuxième pompe hydraulique (19') d'entraînement de déplacement, la première pompe hydraulique (19) d'entraînement de déplacement fournissant le débit volumétrique pour le moteur hydraulique avant droit (15) et pour le moteur hydraulique avant gauche (16), et la deuxième pompe hydraulique (19) d'entraînement de déplacement fournissant le débit volumétrique pour le moteur hydraulique arrière droit (17) et pour le moteur hydraulique arrière gauche (18).

8. Procédé de commande d'un engin de chantier automoteur, comprenant un châssis d'engin (2) porté par des mécanismes de roulement (10A, 10B, 11A, 11B), un cylindre de travail (4) disposé sur le châssis de l'engin, et un dispositif d'entraînement (14) destiné à entraîner au moins deux mécanismes de roulement, qui comprend des moteurs hydrauliques réglables (15, 16, 17, 18), associés aux mécanismes de roulement à entraîner et ayant un volume d'absorption (Vg) variable, et au moins une pompe hydraulique réglable (19) d'entraînement de déplacement destinée à alimenter les moteurs hydrauliques en un débit volumique total variable (Q) de liquide hydraulique,
dans lequel

ladite au moins une pompe hydraulique réglable (19) d'entraînement de déplacement est commandée de telle sorte qu'un débit volumique total (Q) de liquide hydraulique est fourni en fonction de la vitesse de déplacement souhaitée (v), l'engin de chantier comprend, dans le sens de travail, un mécanisme de roulement orientable avant droit (10B) et un mécanisme de roulement orientable avant gauche (10A) et un mécanisme de roulement orientable arrière droit (11B) et un mécanisme de roulement orientable arrière gauche (11A),
un moteur hydraulique avant droit (15) est associé au mécanisme de roulement avant droit, et un moteur hydraulique avant gauche (16) est associé au mécanisme de roulement avant gauche, et un moteur hydraulique arrière droit (17) est associé au mécanisme de roulement arrière droit, et un moteur hydraulique arrière gauche (18) est associé au mécanisme de roulement arrière gauche,
**caractérisé en ce que**
pour chaque moteur hydraulique réglable (15, 16, 17, 18), un débit volumique partiel ($Q_1$, $Q_2$, $Q_3$, $Q_4$) avec lequel le moteur hydraulique respectif doit être actionné est déterminé à partir du débit volumique total (Q) fourni par ladite au moins une pompe hydraulique (19) d'entraînement de déplacement, et, lors d'une augmentation de la vitesse de rotation (n) d'un moteur hydraulique réglable (15, 16, 17, 18) suite à un glissement du mécanisme de roulement (10A, 10B, 11A, 11B) associé au moteur hydraulique réglable, le moteur hydraulique réglable est commandé de telle sorte qu'un volume d'absorption (Vg) est réglé pour le moteur hydraulique réglable, au niveau duquel le débit volumique partiel ($Q_1$, $Q_2$, $Q_3$, $Q_4$) déterminé pour le moteur hydraulique réglable est respecté ou s'établit, ou le débit volumique partiel déterminé est rétabli.

9. Procédé selon la revendication 8,
**caractérisé en ce qu'**à partir du débit volumique total (Q), pour chaque moteur hydraulique réglable (15, 16, 17, 18), un débit volumique partiel ($Q_1$, $Q_2$, $Q_3$, $Q_4$) est déterminé en fonction de l'angle de braquage dudit au moins un mécanisme de roulement orientable (10A, 10B, 11A, 11B).

10. Procédé selon la revendication 9,
**caractérisé en ce que**, lors d'un déplacement en ligne droite où l'angle de braquage dudit au moins un mécanisme de roulement orientable (10A, 10B, 11A, 11B) est sensiblement nul, le débit volumique total (Q) est divisé en parts égales en débits volumiques partiels ($Q_1$, $Q_2$, $Q_3$, $Q_4$) pour les moteurs hydrauliques réglables (15, 16, 17, 18).

11. Procédé selon la revendication 9,
**caractérisé en ce que**, lors d'un déplacement en virage où l'angle de braquage dudit au moins un mécanisme de roulement orientable (10A, 10B, 11A, 11B) n'est pas nul, le débit volumique total (Q) est divisé en les débits volumiques partiels ($Q_1$, $Q_2$, $Q_3$, $Q_4$) pour les moteurs hydrauliques réglables (15, 16, 17, 18) en fonction du rayon de virage (r) du mécanisme de roulement respectif (10A, 10B, 11A, 11B).

12. Procédé selon la revendication 8,
**caractérisé en ce que** l'engin de chantier prévoit plusieurs modes de direction, le dispositif de commande (28) étant configuré de manière à déterminer, à partir du débit volumique total (Q), pour chaque moteur hydraulique réglable (15, 16, 17, 18), un débit volumique partiel ($Q_1$, $Q_2$, $Q_3$, $Q_4$) en fonction du mode de direction.

13. Procédé selon l'une des revendications 8 à 12,
**caractérisé en ce que** les angles de braquage des mécanismes de roulement orientables (10A, 10B, 11A 11B) sont réglés de telle sorte que les prolongements d'axes perpendiculaires aux mécanismes de roulement orientables se coupent en un centre instantané de rotation (P).

14. Procédé selon l'une des revendications 8 à 13,
**caractérisé en ce que** le débit volumique total (Q) de fluide hydraulique pour les moteurs hydrauliques avant droit et gauche (15, 16) et pour les moteurs hydrauliques arrière droit et gauche (17, 18) est fourni par une seule pompe hydraulique (19) d'entraînement de déplacement, ou le débit volumique total pour le moteur hydraulique avant droit (15) et pour le moteur hydraulique avant gauche (16) est fourni par une première pompe hydraulique (19) d'entraînement de déplacement, et le débit volumique pour le moteur hydraulique arrière droit (17) et pour le moteur hydraulique arrière gauche (18) est fourni par une deuxième pompe hydraulique (19') d'entraînement de déplacement.

Fig. 1

Fig. 2

**Fig. 3**

**Fig. 4**

**Fig. 5A**

**Fig. 5B**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080128189 A1
- DE 102004040135 B3
- EP 1350658 A1
- DE 102013106047 A1